# EUROPÄISCHE PATENTSCHRIFT

(11) **EP 0 409 363 B1**
(45) Veröffentlichungstag und Bekanntmachung des Hinweises auf die Patenterteilung: **25.05.1994**
(21) Anmeldenummer: 90250171.7
(22) Anmeldetag: 04.07.1990
(51) Int. Cl.: H01M 10/08, H01M 2/16

(54) **Blei/Schwefelsäure-Akkumulator, Separator für Blei/Schwefelsäure-Akkumulator und Verfahren zur Verringerung der Bildung von dunklen Ablagerungen in einem Blei/Schwefelsäure-Akkumulator**
Separator and process for reducing the formation of dark deposits in a lead sulfuric acid battery
Séparateur et procédé pour diminuer la formation de dépôts sombres dans un accumulateur acide sulfurique plomb

(30) Priorität: 06.07.1989 DE 3922160
(43) Veröffentlichungstag der Anmeldung: 23.01.1991
(73) Patentinhaber: Grace GmbH, D-22844 Norderstedt (DE)
(72) Erfinder: Yaacoub, Claudia Michaela, Dr., D-2085 Quickborn (DE)
(74) Vertreter: UEXKÜLL & STOLBERG

(56) Entgegenhaltungen:
- EP-A- 0 096 371

## Beschreibung

Blei/Schwefelsäure-Akkumulatoren (im folgenden der Kürze halber Bleiakkumulatoren genannt) enthalten zu einem immer größeren Anteil Separatoren aus gefüllten Polyolefinen. Bei diesen Separatoren handelt es sich um mikroporöse Scheider, deren Zusammensetzung und Herstellung aus dem Stand der Technik bekannt ist (vgl. z.B. DE-PS 1 267 423, DE-PS 1 298 712, DE-AS 1 496 123, DE-OS 35 45 615, DE-PS 35 40 718 und DE-PS 36 17 318).

Im Gegensatz zu Separatoren auf Basis von imprägnierten Cellulosepapieren, PVC oder Phenol-Formaldehyd-Harzen bieten Separatoren aus gefüllten Polyolefinen verschiedene Vorteile. Zum einen kann durch ihr günstiges Eigenschaftsspektrum - Separatoren aus gefüllten Polyolefinen haben z.B. einen sehr niedrigen elektrischen Widerstand, sehr kleine Poren, eine geringe Säureverdrängung und eine hohe Oxidationsstabilität - die Lebensdauer und Leistungsfähigkeit von Bleiakkumulatoren verbessert werden, zum anderen ergeben sich auch Vorteile in der Akkumulatorfertigung. Die hohe Flexibilität der Separatoren aus gefüllten Polyolefinen erlaubt die vollautomatische Umhüllung von Bleiplatten mit anschließendem Verschluß der Seitenkanten, so daß sich die Bleiplatten geschützt in einer an drei Seiten geschlossenen Separatortasche befinden.

Bei Verwendung von Separatoren aus gefüllten Polyolefinen in Bleiakkumulatoren werden jedoch auch unerwünschte Vorgänge beobachtet.

Durch Wechselwirkung von angelegtem Strom, Bestandteilen der Bleiplatten, der Batteriesäure und Bestandteilen der gefüllten Polyolefinseparatoren werden intensiv gefärbte Substanzen bzw. Substanzgemische gebildet, die in der Batteriesäure nicht löslich sind. Aufgrund ihres geringen spezifischen Gewichts steigen sie an die Oberfläche der Batteriesäure und ballen sich dort zu intensiv gefärbten, meist dunklen, ofmals klebrigen Agglomeraten zusammen, die sich bevorzugt an Kontaktflächen zwischen Akkumulatorsäure und Akkumulatorbestandteilen, z.B. dem Gehäuse ablagern. Beim Ladeprozeß freigesetzte Gase steigen in Blasen in der Säure nach oben, platzen an der Oberfläche der Säure und schleudern dabei Säure und Ablagerungen nach oben, so daß Deckel, Deckelöffnung, eventuell aufgesetzter Deckelverschluß, gegebenenfalls Füllstandsanzeiger und Außenseite des Akkumulatorgehäuses damit bedeckt werden. Ablagerungen auf der Außenseite des Akkumulatorgehäuses müssen in einem zusätzlichen Reinigungsschritt entfernt werden.

Gehäuse für Bleiakkumulatoren bestehen z.B. aus Polypropylen Acrylglas, Polystyrol oder Glas und sind damit transparent oder vollkommen durchsichtig. Beim Betrieb der Bleiakkumulatoren entstehende gefärbte, meist dunkle Ablagerungen lagern sich an den Innenseiten der Behälter ab und sind daher von außen sichtbar. Da die Ablagerungen selbst nicht transparent sind, lassen sie eine genaue Beurteilung des Säurestands des Bleiakkumulators nicht zu und erschweren damit die regelmäßige Kontrolle und Einstellung des Säurestands. So erhöht sich, wenn nicht genügend Wasser nachgefüllt wird, die Konzentration der Akkumulatorsäure. Gleichzeitig sinkt der Säurespiegel im Akkumulator unter Umständen so weit, daß die Bleiplatten teilweise aus der Säure herausragen und austrocknen. Bleiakkumulatoren, die z.B. für den Antrieb von Fahrzeugen eingesetzt werden, sind oft mit einem Ventilsystem für automatische Bewässerung ausgestattet. Regelmäßig werden diese Bleiakkumulatoren über das Ventilsystem an einen Wasservorratsbehälter angeschlossen. Das Ventilsystem sorgt bei ordnungsgemäßem Betrieb dafür, daß ein bestimmter Flüssigkeitsstand im Bleiakkumulator aufrechterhalten wird. Enthalten derartige Bleiakkumulatoren jedoch Separatoren aus gefüllten Polyolefinen, so werden, wie oben geschildert, während des Betriebs dieser Bleiakkumulatoren gefärbte, meist dunkle Substanzen freigesetzt, die agglomerieren. Diese oft klebrigen Agglomerate lagern sich an den Schwimmern und anderen Teilen des Ventilsystems für die Bewässerung ab, verkleben diese und machen sie damit funktionsuntüchtig. In der Folge wird kein Wasser nachgefüllt, und der Säurespiegel im Akkumulator sinkt stark ab.

Manche Bleiakkumulatoren sind mit Gasungsöffnungen aus porösen Materialien ausgestattet, die ein ungehindertes Entweichen der gebildeten Gase ermöglichen, flüssige Bestandteile jedoch zurückhalten und den Akkumulator vor Zündfunken oder Flammen schützen. Sind in derartigen Bleiakkumulatoren oben beschriebene gefüllte Polyolefinseparatoren enthalten, kann es, wie beschrieben, beim Betrieb der Bleiakkumulatoren zur Bildung von gefärbten, meist dunklen und häufig klebrigen Ablagerungen kommen, die die Entgasungsöffnungen verengen.

Angesichts der oben geschilderten Probleme lag der Erfindung die Aufgabe zugrunde, die sich in Bleiakkumulatoren mit mikroporösen Scheidern aus gefüllten Polyolefinen während der Formation und des Betriebs bildenden gefärbten, meist dunklen und häufig klebrigen Ablagerungen mengenmäßig zu verringern.

Zur Lösung dieser Aufgabe wird ein Blei/Schwefelsäure-Akkumulator mit mindestens einem Separator aus gefülltem Polyolefin, wobei der Separator durch Heißverformung und anschließende Extraktion hergestellt worden ist, vorgeschlagen, der dadurch gekennzeichnet ist, daß im Akkumulator ein oder mehrere Tenside der folgenden Formeln 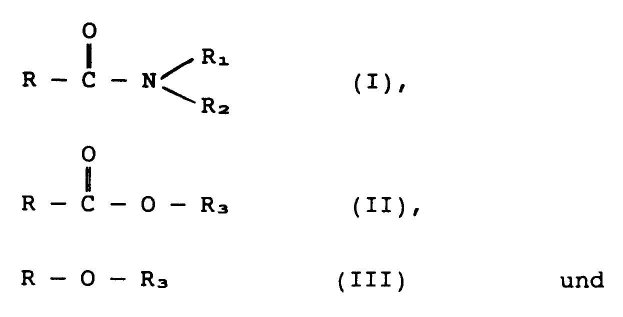 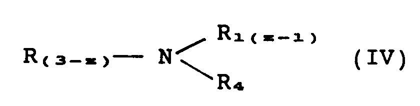
vorhanden sind, wobei R ein verzweigter oder geradkettiger, substituierter oder nicht substituierter Alkyl-, Alkenyl- oder Alkinylrest mit 6-50 Kohlenstoffatomen ist, R₁ Wasserstoff, ein Oxalkylrest oder ein Alkylrest ist, R₂ ein Oxalkylrest, wenn R₁ Wasserstoff oder ein Oxalkylrest ist, oder ein Alkylrest ist, wenn R₁ ein Alkylrest ist, R₃ ein Oxalkyl-, Glycerinoxalkyl- oder Sorbitanoxalkylrest ist und R₄ bei z = 1 ein Oxalkylrest ist und sonst der Definition von R₂ entspricht, z 1 oder 2 ist, der Oxalkylierungsgrad, sofern Oxalkylreste vorhanden sind, insgesamt 2 bis 80 beträgt und der HLB-Wert mindestens 5 beträgt.

Gegenstand der Erfindung ist ferner ein Separator für Blei/Schwefelsäure-Akkumulatoren, aus gefülltem Polyolefin, der durch Heißverformung und anschließende Extraktion hergestellt worden und dadurch gekennzeichnet ist, daß er ein oder mehrere der Tenside mit den Formeln I bis IV enthält.

Schließlich ist Gegenstand der Erfindung ein Verfahren zur Verringerung der Bildung von gefärbten, meist dunklen Ablagerungen in einem Blei/Schwefelsäure-Akkumulator, insbesondere einer Starterbatterie, mit mindestens einem Separator aus gefülltem Polyolefin, wobei der Separator durch Heißverformung und anschließende Extraktion hergestellt worden ist, das dadurch gekennzeichnet ist, daß man in den Akkumulator ein oder mehrere der Tenside mit den Formeln I bis IV einbringt.

Überraschenderweise wurde gefunden, daß der Zusatz der erfindungsgemäß verwendeten Tenside die Menge der gefärbten, meist dunklen Ablagerungen im Bleiakkumulator reduziert, und zwar mit langer Wirkungsdauer und ohne unerwünschte Nebenerscheinungen.

Gleichzeitig wird eine Verringerung des Wasserverbrauchs der Akkumulatoren beobachtet, was einen weiteren erheblichen Vorteil darstellt.

Abgesehen von dem Zusatz der erfindungsgemäß verwendeten Tenside handelt es sich bei dem erfindungsgemäßen Akkumulator um einen üblichen Blei/Schwefelsäure-Akkumulator mit herkömmlichen Elektroden und Schwefelsäure als Elektrolyt. Vorzugsweise handelt es sich um eine Starterbatterie für Kraftfahrzeuge. Das Gehäuse kann aus allen üblichen Materialien bestehen, z.B. Polypropylen, Hartgummi, Acrylglas, Polystyrol, Glas usw. Bei dem Separator handelt es sich um einen gefüllten Polyolefinseparator, der durch Heißverformung (üblicherweise Extrusion oder Pressen, siehe die Beispiele) und anschließende Extraktion hergestellt worden ist. Dementsprechend werden aus Polyolefinfäden oder -fasern hergestellte Separatoren (z. B. in Form von Vliesen) von der Erfindung nicht umfaßt.

Unter Extraktion wird eine teilweise oder vollständige Entfernung von Komponenten aus dem geformten Material und auch die nachträgliche Einführung gleicher oder anderer Komponenten in das geformte Material mit Hilfe von geeigneten Lösungsmitteln verstanden, wobei diese Komponenten, insbesondere Weichmacher aber auch Füllstoffe, Polymere usw. sein können.

Wie in dem bereits oben genannten Stand der Technik beschrieben, enthalten gefüllte Polyolefinseparatoren meistens Polyethylen, wobei im Rahmen der Erfindung ultrahochmolekulares Polyethylen bevorzugt ist. Geeignet sind aber auch Polypropylen, Polybuten, Polystyrol, Ethylen-Propylen-Copolymere, Ethylen-Hexylen-Ccopolymere, Ethylen-Buten-Copolymere, Propylen-Buten-Copolymere, Ethylen-Propylen-Buten-Copolymere und Copolymere aus Ethylen oder Propylen mit einer ethylenisch ungesättigten Monocarbonsäure, nämlich Acrylsäure, Methacrylsäure oder deren Gemische. Auch bezüglich der geeigneten Füllstoffe sei auf den eingangs genannten Stand der Technik verwiesen. Ein erfindungsgemäß bevorzugter Füllstoff ist SiO₂. Auch die geeigneten Weichmacher sind aus dem genannten Stand der Technik bekannt. In der Praxis werden als extrahierbare Weichmacher häufig Öle eingesetzt.

Außer den zuvor genannten Hauptbestandteilen können die Separatoren weitere übliche Bestandteile wie Ruß, Antioxidantien, Gleitmittel, andere Füllstoffe wie z.B. Talkum usw. und gegebenenfalls auch andere Polymere in mehr oder weniger untergeordneter Menge enthalten.

Die den Separator bildenden Materialien werden in üblicher Weise sorgfältig vermischt und dann unter Erwärmung zu einem bahnförmigen Material geformt. Aus diesem wird dann mit einem organischen Lösungsmittel z.B. der Weichmacher extrahiert, um die gewünsche Porösität zu erzielen. Schließlich wird das Separatormaterial zu blattförmigen Separatoren geschnitten. Die Oberflächen des Separators können glatt, gerippt oder in anderer Weise beliebig geformt sein.

Wie sich aus den Formeln I bis IV ergibt, handelt es sich bei den erfindungsgemäß verwendeten Tensiden um nichtionische Tenside, die aus einem unpolaren und einem polaren Teil bestehen. Im unpolaren Teil enthalten diese Tenside eine oder zwei Alkyl-, Alkenyl- oder Alkinylgruppen. Diese können linear oder verzweigt sein und gegebenenfalls Substituenten aufweisen (z.B. -OH). Vorzugsweise sind sie jedoch linear und weisen 8 bis 20 Kohlenstoffatome auf. Alle Moleküle eines geeigneten Tensids können einheitlich eine dieser Gruppen mit bestimmter Kettenlänge enthalten. Da in der Praxis Tenside in großem Umfang aus uneinheitlichen natürlichen Ausgangsmaterialien hergestellt werden, können sie aber auch ohne weiteres Gemische von Gruppen verschiedener Kettenlänge enthalten, d.h. je nach dem verwendeten Ausgangsmaterial besitzen die im Handel erhältlichen Tenside eine bestimmte Kettenlängeverteilung.

Der polare Teil der erfindungsgemäß verwendbaren Tenside besteht aus einer funktionellen Gruppe, die substituiert ist. Bei der funktionellen Gruppe kann es sich um eine Carbonsäureamid-, Amin- oder Alkoholgruppe, die einfach oder zweifach alkyliert oder oxalkyliert ist, oder um eine Carbonsäuregruppe handeln, die oxalkyliert oder zunächst mit Glycerin oder Sorbitan verestert und dann oxalkyliert ist. Die Oxalkylierung kann dabei mit Ethylenoxid, Propylenoxid oder höheren Alkylenoxiden oder auch Gemischen derselben durchgeführt worden sein. Bevorzugt sind solche Tenside, bei denen die Oxalkylierung mit Gemischen verschiedener Alkylenoxide und insbesondere mit reinem Ethylenoxid durchgeführt worden ist. Der Oxalkylierungsgrad ist dabei nicht von ausschlaggebender Bedeutung, liegt aber im allgemeinen im Bereich von 2 bis 80. Bevorzugt ist ein Oxalkylierungsgrad von 2 bis 30 bzw. 5 bis 30. Diese Angaben gelten natürlich nur für diejenigen Tenside, in denen Oxalkylreste vorhanden sind.

Unabhängig von der Struktur beträgt der HLB-Wert der erfindungsgemäß geeigneten Tenside mindestens 5 und vorzugsweise mindestens 8.

Wie schon beim unpolaren Teil beschrieben, können sich bei den erfindungsgemäß geeigneten Tensiden auch die polaren Teile aus Gemischen zusammensetzen. So können die einzelnen Moleküle des Tensids zu unterschiedlichen Graden oxalkyliert sein. Wenn zwei Oxalkylgruppen im polaren Teil des Moleküls enthalten sind, können diese unterschiedlich lang sein. Außerdem können die Oxalkylate endständig blockiert sein (z.B. durch Veretherung mit Methylalkohol).

Wenn die funktionelle Gruppe im polaren Teil des Tensidmoleküls alkyliert ist, so handelt es sich bei den Alkylgruppen vorzugsweise um Methyl- oder Ethylgruppen.

Die erfindungsgemäß geeigneten Tenside entsprechend den Formeln I bis IV, sind bekannt und im Handel erhältlich. Weitere detaillierte Erläuterungen zu diesen Verbindungen sind deshalb nicht erforderlich. Beispiele sind u.a. Oleylaminoxethylat, Stearylaminoxethylat, Talgfettaminoxethylat, Kokosfettaminoxethylat, Kokosfettsäurediethanolamidoxethylat, Kokosfettsäuremonoethanolamidoxethylat, Dodecansäure-N,N-diethylamid, Fettalkoholoxethylate wie Decylalkoholoxethylat, Octylalkoholoxethylat, Kokosfettalkoholoxethylat, Talgfettalkoholoxethylat, Stearylalkoholoxethylat und Oleylalkoholoxethylat, Ölsäureamidoxethylat, Fettsäureoxethylate wie Talgfettsäureoxethylat und Tallölfettsäureoxethylat, Oxoalkoholoxethylate mit 8 bis 20 Kohlenstoffatomen im Alkoholrest, Fettsäureglycerinesteroxethylate wie Polyoxyethylenglycerinmonolaurat, -stearat, -oleat oder -palmitat und Rizinusöloxethylat sowie Fettsäuresorbitanesteroxethylate vom Tween-Typ. Diese handelsüblichen Tenside werden mit unterschiedlichen Oxethylierungsgraden geliefert, wobei Oxethylierungsgrade von 2 bis 30 besonders häufig sind.

Zu erwähnen ist schließlich noch, daß die erfindungsgemäß geeigneten Tenside häufig in Wasser und in Schwefelsäure löslich sind.

Art und Ort der Tensidzugabe haben keinen entscheidenden Einfluß auf die Wirksamkeit der Tenside. Es kann ein Tensid allein oder aber auch eine Mischung aus zwei oder mehreren der erfindungsgemäß geeigneten Tenside verwendet werden. Auch Mischungen von einem oder mehreren der erfindungsgemäß geeigneten Tenside mit anderen Substanzen wie anderen grenzflächenaktiven Stoffen, Entschäumern usw. können zum Einsatz kommen.

Die Tenside können auf die Oberflächen der Separatoren aufgetragen werden. Der Auftrag kann auf der der negativen Elektrode zugewandten Seite, der der positiven Elektrode zugewandten Seite oder auf beiden Seiten des Separators erfolgen. In allen drei Fällen wird bei Verwendung gleicher Tensidmengen die gleiche Verringerung der Menge an dunklen Ablagerungen beobachtet.

Eine andere Möglichkeit ist das Einmischen der erfindungsgemäß geeigneten Tenside in die Mischung zur Herstellung der gefüllten Polyolefinseparatoren. Dies kann bei verschiedenen Schritten der Herstellung der Separatoren erfolgen. Beispielsweise können die Tenside mit den weiteren Rohstoffen für die Herstellung der genannten Separatoren zusammengemischt werden. Die Reihenfolge der Zusammenmischung der Komponenten ist dabei ohne Einfluß, und die Mischung wird anschließend zu einem Blatt geformt und extrahiert. Auch können zunächst alle Rohstoffe zusammengemischt und extrudiert werden. Das Extrudat wird dann mit den Tensiden gemischt, zu einem Blatt geformt und extrahiert. Ebenso ist eine Zugabe der Tenside über eine Dosiereinheit in den mit den anderen Rohstoffen bereits beschickten Extruder möglich, wenn die Blattbildung durch Extrusion erfolgt.

Weitere Möglichkeiten der Zuführung der erfindungsgemäß geeigneten Tenside sind der Auftrag auf die Elektroden oder die Einmischung in die aktiven Massen. Schließlich können die Tenside auch dem Akkumulatorelektrolyten zugegeben werden, z.B. bevor dieser in den Akkumulator gefüllt wird oder nachträglich in den fertigen Akkumulator.

Die zur Anwendung kommende Tensidkonzentration soll bezogen auf den Akkumulatorelektrolyten größer als 0,03 g/l, vorzugsweise größer als 0,08 g/l und insbesondere größer als 0,16 g/l sein. Bezogen auf die Separatoroberfläche soll die Tensidkonzentration größer als 0,1 g/m², vorzugsweise größer als 0,25 g/m² und insbesondere größer als 0,5 g/m² sein.

Wenngleich im Stand der Technik bei der Akkumulatorherstellung bzw. der Separatorherstellung die verschiedensten Tenside einschließlich nichtionischer Tenside verwendet werden bzw. deren Verwendung vorgeschlagen worden ist, ist die Verwendung der Tenside gemäß den Formeln I bis IV in Bleiakkumulatoren mit gefüllten Polyolefinseparatoren noch nicht beschrieben oder empfohlen worden. Auch im Zusammenhang mit der beim Einsatz von gefüllten Polyolefinseparatoren zu beobachtenden Bildung von gefärbten, meist dunklen und oftmals klebrigen Ablagerungen ist die Verwendung von Tensiden und insbesondere nichtionischen Tensiden noch nicht vorgeschlagen worden. Dies ist angesichts der Schwere des Problems der Bildung derartiger Ablagerungen, des sogenannten Black Scums oder Grey Scums, und der unübersehbaren Vielzahl von verwendeten bzw. vorgeschlagenen Tensiden äußerst überraschend und zeigt, daß die Fachwelt offensichtlich in der Verwendung von Tensiden keine Möglichkeit zur Lösung des Black-Scum-Problems gesehen hat.

Die Wirksamkeit der erfindungsgemäß verwendeten Tenside wird im folgenden anhand von Beispielen gezeigt. Zur Beurteilung der Wirksamkeit wurden Akkumulatortests durchgeführt. Die dabei zum Einsatz gekommenen Muster-Akkumulatoren bestanden aus Zellen mit jeweils fünf positiven und vier negativen Platten, Sb-Gehalt 2,5 Gew.%, mit einer Gesamtkapazität von 36 Ah/Zelle. Wenn nicht anders angegeben, wurden die negativen Platten mit Separatortaschen aus gefülltem Polyethylen (Gesamtdicke 1,0 mm) separiert und der Elektrolyt war Schwefelsäure in einer Menge von 400 ml/Zelle.

Nach Durchführung des Tests wurden die Zellen geöffnet und die Menge und Beschaffenheit der dunklen Ablagerungen an Zellkästen, Zellendeckeln und Stopfen von mehreren Personen beurteilt. Die Durchschnittswerte dieser Beurteilungen wurden anschließend miteinander verglichen.

### Beispiel 1

Zwei wie oben beschriebene Akkumulatoren wurden mit jeweils vier Separatortaschen separiert. Der eine wurde mit 400 ml Schwefelsäure der Dichte 1,16 g/cm³ und der andere mit 400 ml einer Lösung aus 0,5 g Kokosfettsäuremonoethanolamidoxethylat (Trübungspunkt etwa 30°C, 1 % in 5 Gew.%-iger NaCl-Lösung) in 1 l Schwefelsäure der Dichte 1,16 g/cm³ gefüllt. Beide Akkumulatoren wurden einer jeweils gleichen elektrischen Prüfung unterzogen. Anschließend wurden die geöffneten Akkumulatoren beurteilt. Im Akkumulator mit der behandelten Schwefelsäure betrug die Menge der gefärbten Ablagerungen etwa 75 % der Ablagerungen im Akkumulator mit der unbehandelten Schwefelsäure.

### Beispiel 2

Eine Mischung aus 61 Gew.% eines naphthenischen Prozeßöls (Weichmacher), 24 Gew.% SiO₂ (Teilchengröße 15 µm), 12 Gew.% Polyethylen, 1 Gew.% Ruß und 2,0 Gew.% Kokosfettsäuremonoethanolamidoxethylat (Trübungspunkt etwa 30°C, 1 % in 5 Gew.%-iger NaCl-Lösung) wurde hergestellt, indem alle Substanzen zusammen in einem Mischer für pulverartige Materialien 10 Minuten vermischt und anschließend in einem Brabender-Plastographen bei 210°C plastifiziert wurden. Aus der heißen plastischen Masse wurden mit einer beheizten Presse Separatorblätter mit einer Dicke von 0,25 mm gepresst, die anschließend mit einem organischen Lösungsmittel zu einem Restölgehalt von 12 % extrahiert wurden. Ein Akkumulator wurde mit 8 dieser Blätter separiert. Ein zweiter Akkumulator wurde mit 8 Blättern separiert, die auf die gleiche Weise aus 62,2 Gew.% Öl, 24,5 Gew.% SiO₂, 12,2 Gew.% Polyethylen und 1,1 Gew.% Ruß hergestellt wurden. Beide Akkumulatoren wurden mit je 400 ml Schwefelsäure der Dichte 1,16 g/cm³ gefüllt und einer jeweils gleichen elektrischen Prüfung unterzogen. Anschließend wurden die Akkumulatoren geöffnet und die Mengen gefärbter Ablagerungen beurteilt. Im Akkumulator, der die Separatoren mit eingearbeitetem Tensid enthielt, betrug die Menge an gefärbten Ablagerungen nur etwa 75 % der Ablagerungen im Akkumulator mit den herkömmlichen Separatoren.

### Beispiel 3

Vier Separatortaschen wurden beidseitig mit einer alkoholischen Lösung von Ölsäureamidoxethylat (Trübungspunkt etwa 50°C 1 g in 100 g 5 Gew.%-iger NaCl-Lösung) bestrichen, so daß sich nach dem Trocknen eine Gesamtmenge von 0,5 g auf den Taschen befand. Mit diesen vier Taschen wurde ein wie oben beschriebener Akkumulator separiert. Ein zweiter Akkumulator wurde mit unbehandelten Taschen separiert. Beide Akkumulatoren wurden mit Schwefelsäure der Dichte 1,28 g/cm³ gefüllt und geladen. Anschließend wurde mit beiden Akkumulatoren ein Wasserverbrauchstest nach DIN 43539-02 durchgeführt. Nach Testende wurden die Akkumulatoren geöffnet und die Menge der gefärbten Ablagerungen an den Kästen beurteilt. Im Akkumulator mit den behandelten Separatortaschen betrug die Menge der gefärbten Ablagerungen etwa 60 % der Ablagerungen im Akkumulator mit den unbehandelten Taschen. Der Wasserverbrauch des Akkumulators mit den behandelten Taschen lag bei 2,3 g/Ah, der des Akkumulators mit den unbehandelten Taschen bei 2,9 g/Ah (14,4 V, + 40°C, nach 21 Tagen).

### Beispiel 4

Die positiven Platten eines Akkumulators wurden mit insgesamt 0,6 g Dodecansäure-N,N-diethylamid bestrichen. Die Platten eines zweiten Akkumulators wurden nicht behandelt. Beide Akkumulatoren wurden mit unbehandelten Taschen separiert. Anschließend wurden beide Akkumulatoren mit Schwefelsäure der Dichte 1,16 g/cm³ gefüllt und einer jeweils gleichen elektrischen Prüfung unterzogen. Nach Testende wurden die Akkumulatoren geöffnet und die Menge der gefärbten Ablagerungen beurteilt. Im Vergleich zu dem Akkumulator mit den unbehandelten Platten betrug die Menge an gefärbten Ablagerungen im Akkkumulator mit den behandelten Platten nur etwa 60 %.

### Beispiel 5

Auf fünf Separatortaschen wurde beidseitig Stearylaminoxethylat (Alkalizahl etwa 90 mg, KOH/g) aufgesprüht, so daß sich eine Gesamtmenge von 0,10 g Tensid auf den Taschen befand. Mit diesen Taschen wurden die positiven Platten eines wie vorher beschriebenen Akkumulators separiert. Ein zweiter Akkumulator wurde ebenso, aber mit unbehandelten Taschen separiert. Die beiden Akkumulatoren wurden mit je 400 ml Schwefelsäure der Dichte 1,16 g/cm³ gefüllt und jeweils der gleichen elektrischen Prüfung unterzogen. Anschließend wurden die Akkumulatoren geöffnet und die Menge der gefärbten Ablagerungen beurteilt. Im Akkumulator mit den behandelten Separatortaschen betrug die Menge der gefärbten Ablagerungen nur etwa 75 % der Ablagerungen im Akkumulator mit den unbehandelten Taschen.

### Beispiel 6

Vier Separatortaschen wurden auf der glatten Seite mit einer wäßrigen Lösung von Oleylaminoxethylat (Alkalizahl etwa 115 mg KOH/g) bestrichen, so daß sich nach dem Trocknen der Taschen eine Menge von 2,5 g/m² Separatormaterial auf den Taschen befand. Mit diesen vier Taschen wurde ein wie vorher beschriebener Akkumulator separiert. Ein zweiter Akkumulator wurde mit vier unbehandelten Taschen separiert. Die beiden Akkumulatoren wurden mit je 400 ml Schwefelsäure der Dichte 1,16 g/cm³ gefüllt und einer jeweils gleichen elektrischen Prüfung unterzogen. Anschließend wurden die Akkumulatoren geöffnet und die Menge der gefärbten Ablagerungen beurteilt. Im Akkumulator mit den behandelten Separatortaschen betrug die Menge der gefärbten Ablagerungen nur etwa 40 % der Ablagerungen im Akkumulator mit den unbehandelten Taschen.

## Patentansprüche

1. Blei/Schwefelsäure-Akkumulator mit mindestens einem Separator aus gefülltem Polyolefin, wobei der Separator durch Heißverformung und anschließende Extraktion mit geeigneten Lösungsmitteln unter teilweiser oder vollständiger Entfernung von Komponenten aus dem geformten Material und gegebenenfalls nachträglicher Einführung gleicher oder anderer Komponenten in das geformte Material hergestellt worden ist, dadurch gekennzeichnet, daß im Akkumulator ein oder mehrere Tenside der folgenden Formeln: 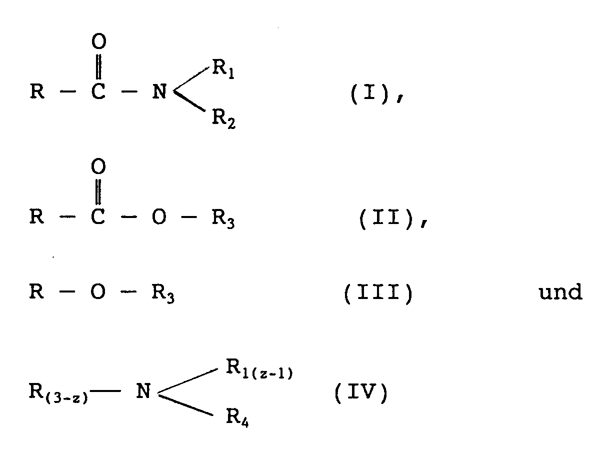 vorhanden sind, wobei R ein verzweigter oder geradkettiger, substituierter oder nicht substituierter Alkyl-, Alkenyl- oder Alkinylrest mit
6-50 Kohlenstoffatomen ist, R₁ Wasserstoff, ein Oxalkylrest oder ein Alkylrest ist, R₂ ein Oxalkylrest, wenn R₁ Wasserstoff oder ein Oxalkylrest ist, oder ein Alkylrest ist, wenn R₁ ein Alkylrest ist, R₃ ein Oxalkyl-, Glycerinoxalkyl- oder Sorbitanoxalkylrest ist und R₄ bei z = 1 ein Oxalkylrest ist und sonst der Definition von R₂ entspricht, z 1 oder 2 ist, der Oxalkylierungsgrad, sofern Oxalkylreste vorhanden sind, insgesamt 2 bis 80 beträgt und der HLB-Wert mindestens 5 beträgt.

2. Akkumulator nach Anspruch 1, dadurch gekennzeichnet, daß der Separator aus gefülltem Polyethylen, insbesondere ultrahochmolekularem Polyethylen besteht und im wesentlichen mit SiO₂ und Weichmacher gefüllt ist.

3. Akkumulator nach Anspruch 1 oder 2, dadurch gekennzeichnet, daß R linear ist und 8 - 20 Kohlenstoffatome aufweist.

4. Akkumulator nach einem der Ansprüche 1 bis 3, dadurch gekennzeichnet, daß der Oxalkylierungsgrad 2 - 30 und insbesondere 5 - 30 beträgt.

5. Akkumulator nach einem der Ansprüche 1 bis 4, dadurch gekennzeichnet, daß die Oxalkylreste Ethoxyreste sind.

6. Akkumulator nach einem der Ansprüche 1 bis 5, dadurch gekennzeichnet, daß der HLB-Wert mindestens 8 beträgt.

7. Akkumulator nach einem der Ansprüche 1 bis 6, dadurch gekennzeichnet, daß das Tensid oder die Tendsidmischung auf die Separatoroberfläche aufgebracht ist.

8. Akkkumulator nach einem der Ansprüche 1 bis 7, dadurch gekennzeichnet, daß bezogen auf den Akkumulatorelektrolyten mehr als 0,03 g/l, vorzugsweise mehr als 0,08 g/l und insbesondere mehr als 0,16 g/l Tensid vorhanden sind.

9. Separator für Blei/Schwefelsäure-Akkumulatoren, insbesondere Starterbatterien, aus gefülltem Polyolefin, der durch Heißverformung und anschließende Extraktion hergestellt worden ist, dadurch gekennzeichnet, daß er ein oder mehrere der Tenside mit den Formeln I bis IV gemäß Patentanspruch 1 enthält.

10. Separator nach Anspruch 9, dadurch gekennzeichnet, daß das Tensid oder die Tensidmischung auf mindestens einer der beiden Oberflächen des Separators aufgebracht ist.

11. Verfahren zur Verringerung der Bildung von dunklen Ablagerungen in einem Blei/Schwefelsäure-Akkumulator, insbesondere einer Starterbatterie, mit mindestens einem Separator aus gefülltem Polyolefin, wobei der Separator durch Heißverformung und anschließende Extraktion hergestellt worden ist, dadurch gekennzeichnet, daß man in den Akkumulator ein oder mehrere der Tenside mit den Formeln I bis IV gemäß Patentanspruch 1 einbringt.

## Claims

1. Lead/sulphuric acid battery having at least one separator made of filled polyolefin, the separator having been produced by hot forming followed by extraction using suitable solvents with partial or complete removal of components from the formed material and, if appropriate, subsequent introduction of identical or different components into the formed material, characterized in that one or more surfactants of the following formulae: 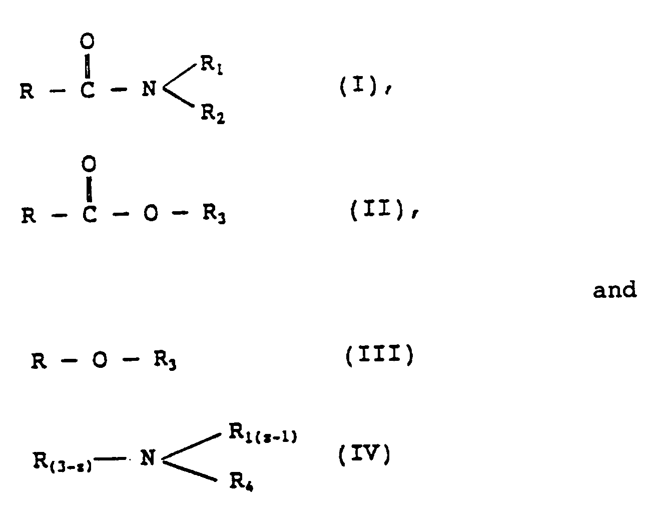 are present in the battery, in which formulae R is a branched or straight-chain substituted or unsubstituted alkyl, alkenyl or alkynyl radical having 6-50 carbon atoms, R₁ is hydrogen, an oxyalkyl radical or an alkyl radical, R₂ is an oxyalkyl radical if R₁ is hydrogen or an oxyalkyl radical, or is an alkyl radical if R₁ is an alkyl radical, R₃ is an oxyalkyl, glycerinoxyalkyl or sorbitanoxyalkyl radical, and R₄ is an oxyalkyl radical if z is 1 and otherwise defined as for R₂, z is 1 or 2, and the degree of oxyalkylation, if oxyalkyl radicals are present, is, in total, 2 to 80 and the HLB value is at least 5.

2. Battery according to claim 1, characterized in that the separator is composed of filled polyethylene, in particular ultra-high-molecular-weight polyethylene, and is filled essentially with SiO₂ and plasticizer.

3. Battery according to claim 1 or 2, characterized in that R is linear and has 8-20 carbon atoms.

4. Battery according to one of claims 1 to 3, characterized in that the degree of oxyalkylation is 2-30 and, in particular, 5-30.

5. Battery according to one of claims 1 to 4, characterized in that the oxyalkyl radicals are ethoxy radicals.

6. Battery according to one of claims 1 to 5, characterized in that the HLB value is at least 8.

7. Battery according to one of claims 1 to 6, characterized in that the surfactant or the surfactant mixture is applied to the separator surface.

8. Battery according to one of claims 1 to 7, characterized in that more than 0.03 g/l, preferably more than 0.08 g/l and, in particular, more than 0.16 g/l of surfactant are present based on the battery electrolyte.

9. Separator for lead/sulphuric acid batteries, in particular starter batteries, made of filled polyolefin, which separator has been produced by hot forming followed by extraction, characterized in that it contains one or more of the surfactants of formulae I to IV according to Patent claim 1.

10. Separator according to claim 9, characterized in that the surfactant or the surfactant mixture is applied to at least one of the two surfaces of the separator.

11. Process for reducing the formation of dark deposits in a lead/sulphuric acid battery, in particular a starter battery, having at least one separator made of filled polyolefin, the separator having been produced by hot forming followed by extraction, characterized in that one or more of the surfactants of the formulae I to IV according to patent claim 1 are introduced into the battery.

## Revendications

1. Accumulateur plomb/acide sulfurique, avec au moins un séparateur en polyoléfine chargée, le séparateur étant produit par mise en forme à chaud et ensuite extraction avec des solvants appropriés, avec élimination partielle ou complète de composants du matériau formé et, le cas échéant, introduction subsquente de composants identiques ou différents dans le matériau formé, caractérisé en ce qu'il y a, dans l'accumulateur, un ou plusieurs agents tensio-actifs des formules suivantes : 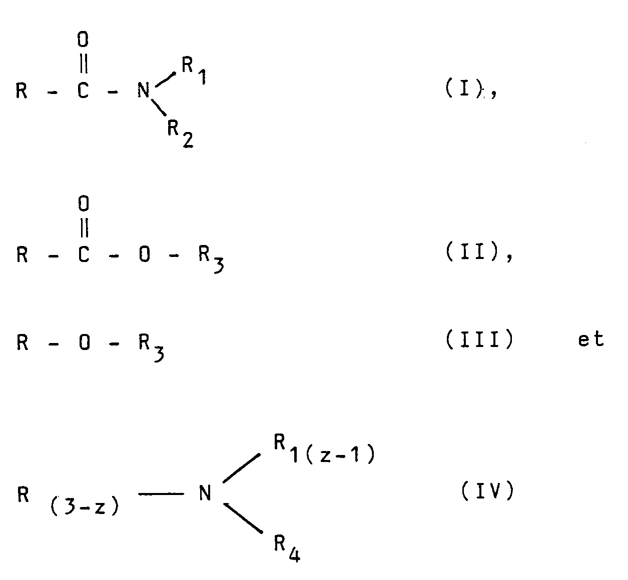 où R est un groupe alkyle, alkényle ou alkynyle, à chaîne droite ou ramifiée, substitué ou non substitué, contenant 6-50 atomes de carbone, R₁ est de l'hydrogène, un groupe alcoxy ou un groupe alkyle, R₂ est un groupe alcoxy quand R₁ est hydrogène ou un groupe alcoxy ou bien un groupe alkyle quand R₁ est un groupe alkyle, R₃ est un groupe alcoxy, glycérinalcoxy ou sorbitanalcoxy et R₄, pour z=1, est un groupe alcoxy et, autrement, correspond à la définition de R₂, z est 1 ou 2, le degré d'alcoxylation, tant qu'il y a des groupes alcoxy, étant, dans l'ensemble, de 2 à 80 et la valeur de HLB étant d'au moins 5.

2. Accumulateur selon la revendication 1, caractérisé en ce que le séparateur se compose de polyéthylène chargé, en particulier polyéthylène de très fort poids moléculaire et est chargé essentiellement de SiO₂ et d'un assouplissant.

3. Accumulateur selon la revendication 1 ou 2, caractérisé en ce que R est linéaire et présente 8 - 20 atomes de carbone.

4. Accumulateur selon l'une quelconque des revendications 1 à 3, caractérisé en ce que le degré d'alcoxylation est de 2 - 30 et, en particulier, de 5 - 30.

5. Accumulateur selon l'une quelconque des revendications 1 à 4, caractérisé en ce que les groupes alcoxy sont des groupes éthoxy.

6. Accumulateur selon l'une quelconque des revendications 1 à 5, caractérisé en ce que la valeur de HLB est d'au moins 8.

7. Accumulateur selon l'une quelconque des revendications 1 à 6, caractérisé en ce que l'agent tensio-actif ou le mélange d'agents tensio-actifs est placé sur la surface du séparateur.

8. Accumulateur selon l'une quelconque des revendications 1 à 7, caractérisé en ce qu'en se rapportant à l'électrolyte de l'accumulateur, il y a plus de 0,03 g/l, avantageusement plus de 0,08 g/l et, en particulier, plus de 0,16 g/l de l'agent tensio-actif.

9. Séparateur pour accumulateurs au plomb/acide sulfurique, en particulier pour des batteries de démarreur en polyoléfine chargée, que l'on produit par mise en forme à chaud et ensuite extraction, caractérisé en ce qu'il contient un ou plusieurs des agents tensio-actifs des formules I à IV selon la revendication 1.

10. Séparateur selon la revendication 9, caractérisé en ce que l'agent tensio-actif ou le mélange d'agents tensio-actifs est appliqué au moins sur l'une des deux surfaces du séparateur.

11. Procédé pour diminuer la formation de dépôts sombres dans un accumulateur au plomb/acide sulfurique, en particulier, une batterie de démarreur, avec au moins un séparateur en polyoléfine chargée, le séparateur étant produit par mise en forme à chaud et ensuite extraction, caractérisé en ce que l'on incorpore, dans l'accumulateur, un ou plusieurs des agents tensio-actifs des formules I à IV selon la revendication 1.
